# DEMANDE DE BREVET EUROPEEN

(11) **EP 1 669 228 A1**
(43) Date de publication de la demande: **14.06.2006**
(21) Numéro de dépôt: 05110908.0
(22) Date de dépôt: 17.11.2005
(51) Int. Cl.: B60J 1/20

(54) **Dispositif d'occultation comprenant deux stores à enrouleur pour véhicule automobile, et véhicule correspondant.**

(30) Priorité: 09.12.2004 FR 0413148
(71) Demandeur: WAGON SAS, 79302 Bressuire Cedex (FR)
(72) Inventeur: Guilloteau, Sébastien, 79350 Faye L'Abbesse (FR)
(74) Mandataire: Bioret, Ludovic

(57) **Abrégé**

L'invention concerne dispositif d'occultation pour une surface vitrée d'un véhicule automobile présentant au moins deux bords opposés (2a,2b) non parallèles, comprenant deux stores à enrouleur comprenant chacun un rideau d'occultation (11,21) solidaire d'un tube d'enroulement (12,22) à l'une de ses extrémités et une barre de tirage (13,23) à son autre extrémité,

Selon l'invention, chacun des rideaux d'occultation (11,21) présente un côté (11a,21a) parallèle à un des bords non parallèles (2a,2b) de la surface à occulter (et s'étendant le long de ce bord).
Toujours selon l'invention, au moins une des deux barres de tirages (13,23) et/ou au moins un des deux tubes d'enroulement (12,22) sont guidés dans au moins deux rails de guidage non parallèles (14a,14b,24a,24b) situés le long de chacun des deux bords non parallèles (2a,2b) de la surface à occulter et comprennent au moins un élément coulissant de façon à compenser la variation de l'écartement entre les rails.

## Description

### 1. Domaine de l'invention

Le domaine de l'invention est celui des stores, notamment pour véhicule automobile. Plus précisément, l'invention concerne les stores à rideau d'occultation amovible, destinés à être déployés pour occulter une baie non rectangulaire.

L'invention concerne notamment les stores à enrouleur, mais d'autres modes de repliement de la toile peuvent, bien sûr, être mis en oeuvre (tels que par exemple un repliement de la toile suivant des plis préformés).

### 2. Art antérieur

Classiquement, un store à enrouleur présente une toile, ou rideau, d'occultation d'une surface vitrée (ou baie) en position déployée.

Une des extrémités de la toile est montée sur un rouleau, ou tube enrouleur, mobile en rotation. L'autre extrémité de la toile est munie d'une barre de tirage.

La barre de tirage peut être solidaire de deux patins reliés ou montés à ses extrémités, et qui circulent dans des rails pour guider la barre de tirage, et par conséquent la toile d'occultation, entre sa position déployée et sa position repliée. Ce déplacement peut être manuel ou motorisé.

En position repliée, la toile est essentiellement enroulée autour du tube d'enroulement.

Dans de nombreux cas, et par exemple pour les vitres arrière de la plupart des véhicules actuels, la baie présente une forme non rectangulaire, et souvent trapézoïdale. Dans ce cas, une toile d'occultation classique rectangulaire n'assure pas une occultation efficace de la surface vitrée. La forme de la toile peut être adaptée en fonction de la forme de la baie à occulter. Lorsque la surface à occulter est non rectangulaire, le côté de la toile relié au rouleau (par exemple la base du trapèze) est souvent plus grand que le côté relié à la barre de tirage.

Dans ce cas, les rails, qui sont parallèles aux bords de la baie, ne sont eux-mêmes pas parallèles. On doit donc prévoir des éléments coulissants, solidaires des patins et pouvant se déplacer en translation par rapport au corps de la barre de tirage. On forme ainsi une barre de tirage télescopique, s'adaptant à l'écartement variable des rails.

Ainsi, les techniques connues permettent l'occultation totale d'une surface vitrée non rectangulaire au moyen d'une toile présentant une forme similaire à celle de la surface à occulter.

### 3. Inconvénients de l'art antérieur

Un inconvénient de cette technique de l'art antérieur est cependant qu'elle ne permet pas de moduler précisément le degré d'occultation de la surface vitrée. En effet, les techniques connues de l'art antérieur ne permettent généralement que de choisir entre une position totalement repliée dans laquelle la vitre n'est pas occultée et une position totalement déployée dans laquelle le rideau occulte l'intégralité de la vitre.

Certaines techniques de l'art antérieur peuvent permettent en outre l'obtention de positions intermédiaires dans lesquelles le déploiement du rideau est partiel.

Selon les techniques connues, il n'est cependant pas possible d'occulter sélectivement la partie gauche ou la partie droite d'une fenêtre, sur l'intégralité de la hauteur de celle-ci ou uniquement une portion supérieure gauche ou inférieure droite par exemple, tout en conservant la possibilité d'occulter intégralement la surface vitrée. En d'autres termes, quelle que soit la position intermédiaire, la partie proche du tube enrouleur est toujours occultée, et la partie éloignée du tube est toujours dégagée.

### 4. Objectifs de l'invention

L'invention a notamment pour objectif de pallier cet inconvénient de l'art antérieur.

Plus précisément, un objectif de l'invention est de fournir une technique permettant une occultation intégrale ou pratiquement intégrale d'une surface vitrée non rectangulaire de véhicule automobile, tout en offrant une grande modularité pour la partie de la fenêtre occultée, dans des positions intermédiaires.

En d'autres termes, un objectif de l'invention est de permettre au conducteur ou aux passagers du véhicule de choisir librement la partie de la vitre devant laquelle ils souhaitent déployer une toile occultante (ou rideau d'occultation), notamment pour se protéger du soleil ou d'un reflet gênant.

Un objectif de l'invention est ainsi de permettre par exemple l'occultation uniquement d'une partie centrale de la vitre, si cela est souhaitable.

Un autre objectif de l'invention est de proposer un système pour l'occultation d'une surface non rectangulaire offrant une telle modularité, qui reste cependant relativement simple et peu coûteux.

Un autre objectif de l'invention est de proposer un système qui soit simple à monter dans le véhicule et qui ne nécessite pas de réglages particuliers.

### 5. Caractéristiques essentielles de l'invention

Ces objectifs, ainsi que d'autres qui apparaîtront par la suite, sont atteints à l'aide d'un dispositif d'occultation pour une surface vitrée d'un véhicule automobile présentant au moins deux bords opposés non parallèles, comprenant deux stores à enrouleur comprenant chacun un rideau d'occultation solidaire d'un tube d'enroulement à l'une de ses extrémités et une barre de tirage à son autre extrémité,

Selon l'invention, chacun des rideaux d'occultation présente un côté parallèle à un des bords non parallèles de la surface à occulter (et s'étendant le long de ce bord), et au moins une des deux barres de tirage et/ou au moins un des deux tubes d'enroulement sont guidés dans au moins deux rails de guidage non parallèles situés le long de chacun des deux bords non parallèles de la surface à occulter et comprennent au moins un élément coulissant de façon à compenser la variation de l'écartement entre les rails.

Ainsi, l'invention repose sur une approche tout à fait nouvelle et inventive consistant à occulter une surface non rectangulaire, présentant au moins deux bords non parallèles, au moyen de deux stores à enrouleur.

Les enrouleurs et les barres de tirage solidaires de chacun des deux rideaux d'occultation sont mobiles (ou tout au moins, un de ces éléments) et comprennent un élément coulissant de façon à compenser la variation de l'écartement entre les rails. On forme ainsi des tubes d'enroulement et des barres de tirage télescopiques s'adaptant progressivement à l'écartement entre les rails de guidage.

D'une façon générale, dans le cas où la surface vitrée est une vitre ou un hayon arrière ou une vitre latérale par exemple, un des rideaux d'occultation pourra, dans sa position déployée, occulter la partie haute de la vitre et l'autre la partie basse de celle-ci.

Le dispositif selon l'invention permet ainsi d'occulter sélectivement l'intégralité de la surface vitrée, ou la partie droite, ou la partie gauche ou encore la partie centrale, sur la totalité de la hauteur de la vitre.

En outre, le dispositif selon l'invention permet de combiner l'occultation par exemple d'une partie gauche supérieure et de l'intégralité de la partie inférieure de la vitre ou d'une partie inférieure gauche, centrale ou droite.

Selon un premier mode de réalisation avantageux de l'invention, le tube d'enroulement et/ou la barre de tirage d'un premier store et le tube d'enroulement et/ou la barre de tirage du second store sont guidés dans une même paire de rail.

Ce mode de réalisation permet la réalisation d'un dispositif simple et pouvant ainsi être adapté aux véhicules équipés selon les techniques classiques et connues dans l'art antérieur mettant en oeuvre une paire de rails et un seul store à enrouleur, tout en permettant l'obtention d'une modularité d'occultation plus importante que les techniques connues.

De plus, ce mode de réalisation permet de solidariser le déplacement de certains des éléments du store, tels que par exemple des deux barres de tirage si les stores se déploient dans le même sens. En effet, le déplacement de l'une d'elle (manuellement par exemple) provoque le déplacement de l'autre dans le rail et permet ainsi un déplacement simultané et solidaire.

Cependant, la mobilité d'une des barres de tirage et d'un des tubes d'enroulement est alors tributaire de la position des autres à l'intérieur des rails, ceci ayant pour conséquence de restreindre la modularité d'occultation de la surface vitrée.

Selon un second mode de réalisation avantageux de l'invention, la barre de tirage et/ou le tube d'enroulement d'un premier des deux stores sont guidés dans une première paire de rails et la barre de tirage et/ou le tube d'enroulement du second des deux stores sont guidés dans une seconde paire de rails, les rails de chacun des deux paires de rails étant situés le long de chacun des deux bords non parallèles de la surface à occulter.

Le déplacement de la barre de tirage et/ou du tube d'enroulement d'un des stores est ainsi totalement indépendant de celui de la barre de tirage et/ou du tube d'enroulement de l'autre store, et permet ainsi l'obtention d'une modularité maximale dans l'occultation de la vitre.

Avantageusement, le déploiement des deux rideaux d'occultation peut se faire dans le même sens, les deux tubes d'enroulement étant alors situés du même côté des barres de tirage, ou en sens contraire.

Préférentiellement, la somme des longueurs desdits deux tubes d'enroulement est supérieure ou égale à la plus grande des distances (également appelée hauteur) entre les bords de la surface vitrée le long desquels se trouvent les rails.

En effet, cela permet l'obtention d'une occultation intégrale de la vitre, sur toute la hauteur de celle-ci, lorsque les rideaux d'occultation sont totalement déployés. De la même façon, lorsqu'ils ne sont pas totalement déployés, mais sont situés l'un au-dessus de l'autre, l'intégralité de la hauteur de la fenêtre est occultée, quelque que soit la partie de la vitre devant laquelle sont situés les rideaux.

De façon avantageuse, la somme des longueurs desdits deux tubes d'enroulement est supérieure la plus grande des hauteurs de la vitre, de façon que les deux rideaux d'occultation se recouvrent sur au moins une partie de leur surface, pour occulter efficacement la surface vitrée et empêcher la lumière de passer dans l'habitacle au niveau de la jonction entre les bords des deux rideaux.

Préférentiellement la somme des longueurs des deux barres de tirage est supérieure ou égale à la plus grande des hauteurs de la surface vitrée (c'est-à-dire la plus grande distance entre les bords de la surface vitrée le long desquels se trouvent les rails). Cela permet également d'obtenir une occultation intégrale sur toute la hauteur de la vitre quelle que soit la position des rideaux d'occultations au niveau de la vitre.

Avantageusement, les longueurs d'au moins un des tubes d'enroulement et/ou d'au moins une barre de tirage est inférieure ou égale à la plus petite des hauteurs de la surface vitrée (c'est-à-dire la plus grande distance entre les bords de la surface vitrée le long desquels se trouvent les rails).

De façon préférée, la longueur des deux barres de tirage et des deux tubes d'enroulement sont inférieures ou égales à la plus petite hauteur de la vitre. Cela permet en effet à ceux-ci d'être déplacés sur toute la longueur de la surface vitrée et par exemple que les deux stores soient en position repliée, les tubes d'enroulement et les barres de tirage étant en position de rangement du côté de la plus petite hauteur de la vitre.

On comprend aisément que cela permet ainsi une modularité maximale du dispositif, les tubes d'enroulement et barres de tirage pouvant être guidés à l'intérieur des rails sur toute la longueur de la vitre.

Selon un premier mode de réalisation avantageux de l'invention, au moins un des rideaux d'occultation est trapézoïdal.

Le second rideau d'occultation peut être également trapézoïdal ou rectangulaire, un bord de chacun des deux rideaux étant parallèle à un des bords opposés non parallèles de la surface à occulter et s'étendant le long de ce bord quelle que soit la position des tubes d'enroulement et des barres de tirage et quel que soit le degré de déploiement des stores. L'autre bord de chacun des rideaux peuvent, comme indiqué précédemment, se chevaucher partiellement lorsqu'ils sont déployés.

De façon avantageuse, un rideau rectangulaire pourra être utilisé lorsque l'un des bords non parallèles de la surface vitrée est perpendiculaire aux deux côtés adjacents (ou bords latéraux).

Avantageusement, le tube d'enroulement solidaire d'un rideau de forme trapézoïdal pourra être de forme tronconique. En effet, lorsque le bord du rideau trapézoïdal s'étend le long d'un des bords de la vitre (et ce quel que soit le degré de déploiement) et n'est pas perpendiculaire au tube d'enroulement, des plis sont susceptible de se former lors de l'enroulement autour d'un tube d'enroulement cylindrique pourra être à l'origine de plis sur l'un des bords du rideau. Ainsi, c'est plus particulièrement dans cette configuration que l'utilisation d'un tube d'enroulement tronconique pourra se révéler avantageuse, celle-ci permettant de compenser ces plis dû à la différence de vitesse d'enroulement des deux bord du rideau.

Selon un second mode de réalisation avantageux de l'invention, au moins un des rideaux d'occultation est rectangulaire. Le second rideau pourra également être rectangulaire ou avoir la forme d'un parallélogramme.

Comme indiqué précédemment, un rideau rectangulaire dont le tube d'enroulement est parallèle à deux bords opposés et parallèles de la vitre pourra être utilisé lorsque l'un des deux bords non parallèles de la vitre, adjacent aux bords parallèles, forme avec ceux-ci un angle droit. Le rideau rectangulaire sera alors placé de façon qu'un de ses bords s'étende le long de ce bord non parallèle.

Lorsque les deux rideaux d'occultation sont rectangulaires, ceux-ci, ainsi que les deux barres de tirages entre-elles et les deux tubes d'enroulement formeront un angle l'un par rapport à l'autre, un bord de chacun des rideaux étant parallèle à un des bords non parallèles de la vitre à occulter.

En raison de cet angle formé, deux petite surfaces triangulaires, situées chacune au niveau d'un coin opposé de la surface vitrée ne sont pas occultées par les rideaux d'occultation lorsque ceux-ci sont dans la position totalement déployée.

Il est possible, si l'occultation de ces surfaces triangulaires est souhaitable, d'utiliser la sérigraphie par exemple, de façon que la vitre soit plus foncée au niveau de ces zones et ne laisse pas (ou peu) passer la lumière, ou en permettant un déplacement des barres de tirage et des tubes d'enroulement légèrement au-delà de la surface à occulter.

Dans le cas où l'un des rideaux d'occultation est rectangulaire et l'autre de la forme d'un parallélogramme, une occultation maximale de la surface vitrée pourra être obtenue lorsque les rideaux sont dans la position totalement déployée.

Selon un mode de réalisation avantageux de l'invention, les deux tubes d'enroulement sont solidaires et montés coulissants l'un par rapport à l'autre par des moyens de liaison. Il est également envisageable de solidariser en coulissement également les deux barres de tirages. Dans ce cas, les deux rideaux d'occultation se déploient dans le même sens.

S'il est souhaitable selon un autre mode de réalisation que les rideaux se déploient en sens inverse, on pourra solidariser en coulissement le tube d'enroulement d'un des rideaux avec la barre de tirage de l'autre.

Les tubes d'enroulement pourront avantageusement être montés dos-à-dos et liés par une liaison glissière formant moyens de liaison et permettant leur coulissement l'un par rapport à l'autre.

Ainsi, lorsque par exemple les deux enrouleurs sont solidaires en coulissement, l'élément coulissant de l'un des tubes d'enroulement, permettant de compenser la variation d'écartement des rails, peut être formé par l'autre tube d'enroulement et réciproquement. Le même raisonnement s'applique bien sûr aux barres de tirage si celles-ci sont solidaires l'une de l'autre et montées en coulissement, ou encore, lorsque c'est le tube d'enroulement qui est solidarisé à une barre de tirage.

De façon préférée, lorsque les tubes d'enroulement ou les barres de tirage sont solidaires en coulissement une seule paire de rail pourra être prévue pour guider leur déplacement. En effet, il pourra être avantageux de prévoir selon ce mode de réalisation que l'ensemble formé par les deux tubes d'enroulement est équipé à chaque extrémité d'un patin (ou de tout autre élément roulant et/ou coulissant adapté) se déplaçant dans les rails de guidage.

Par ailleurs, selon un autre mode de réalisation, il sera possible de prévoir la présence d'une barre télescopique (dont la longueur est variable en fonction de l'écartement entre les rails) sur laquelle sont montés les deux tubes d'enroulement, par exemple, de façon que ceux ci soient mobiles par rapport à la barre télescopique. La barre télescopique de support des deux tubes d'enroulement est dans ce cas l'élément coulissant pour chacun des tubes d'enroulement permettant de compenser l'écartement entre les rails.

De façon avantageuse, et comme décrit précédemment, dans ce cas, lorsque les tubes d'enroulement et/ou les barres de tirage sont solidaires en coulissement par un tel moyen de liaison, il sera possible de prévoir une seule paire de rails pour guider le déplacement des barres télescopiques de support.

En outre, il sera possible de prévoir que les tubes d'enroulement (par exemple) sont montés en coulissement même lorsque ceux-ci forment un angle prédéterminé et ne sont donc pas alignés l'un par rapport à l'autre.

Préférentiellement, au moins une extrémité des barres de tirage et/ou des tubes d'enroulement sont solidaires d'éléments roulants et/ou coulissants se déplaçant à l'intérieur des rails de guidage, tels que des patins par exemple. En outre, les éléments coulissants que comprennent les barres de tirage et les tubes d'enroulement pour compenser la variation de l'écartement entre les rails pourront également présenter une extrémité équipée d'éléments roulants et/ou coulissants se déplaçant à l'intérieur des rails de guidage.

Avantageusement, les patins (ou tous autres éléments roulants et/ou coulissants) pourront être liés par une liaison de type pivot).

L'invention concerne également tout véhicule automobile équipé d'un dispositif d'occultation tel que présenté.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1A présente un synoptique d'un dispositif selon l'invention dans lequel les deux rideaux d'occultation sont trapézoïdaux ;
- Les figures 2A, 2B, et 2C présentent le dispositif selon la figure 1 dans lequel les deux rideaux d'occultation sont respectivement déployés, partiellement repliés et totalement repliés ;
- Les figures 3A, 3B et 3C illustrent également un dispositif selon la figure 1 dans lesquelles les rideaux d'occultation sont partiellement replié et occupent différentes positions au niveau de la fenêtre ;
- La figure 4A présente un dispositif selon l'invention dans lequel un des rideau d'occultation est trapézoïdal et l'autre est rectangulaire ;
- La figure 4B illustre la coupe longitudinale d'un tube d'enroulement tronconique ;
- Les figures 5A et 5B présentent un dispositif d'occultation selon l'invention dans lequel un des rideau est rectangulaire et l'autre a la forme d'un parallélogramme ; et la figure 5C illustre le tube d'enroulement solidaire du rideau ayant la forme d'un parallélogramme partiellement enroulé ;
- La figure 6A présente un dispositif d'occultation selon l'invention dans lequel les deux rideaux d'occultation sont rectangulaires, et la figure 6B illustre les deux tubes d'enroulement des rideaux rectangulaires solidaires en coulissement.

### 7. Description d'un mode de réalisation de l'invention

Le principe général de l'invention repose sur l'occultation d'une surface vitrée (ou baie) non rectangulaire et présentant au moins deux côtés non parallèles, au moyen de deux rideaux (ou toiles) d'occultation, un bord de chacun des rideaux s'étendant le long d'un des bords non parallèles de la vitre. Chacun des rideaux d'occultation est monté sur un tube d'enroulement et solidaire d'une barre de tirage, présentant un élément coulissant permettant de compenser la variation de l'écartement entre les rails.

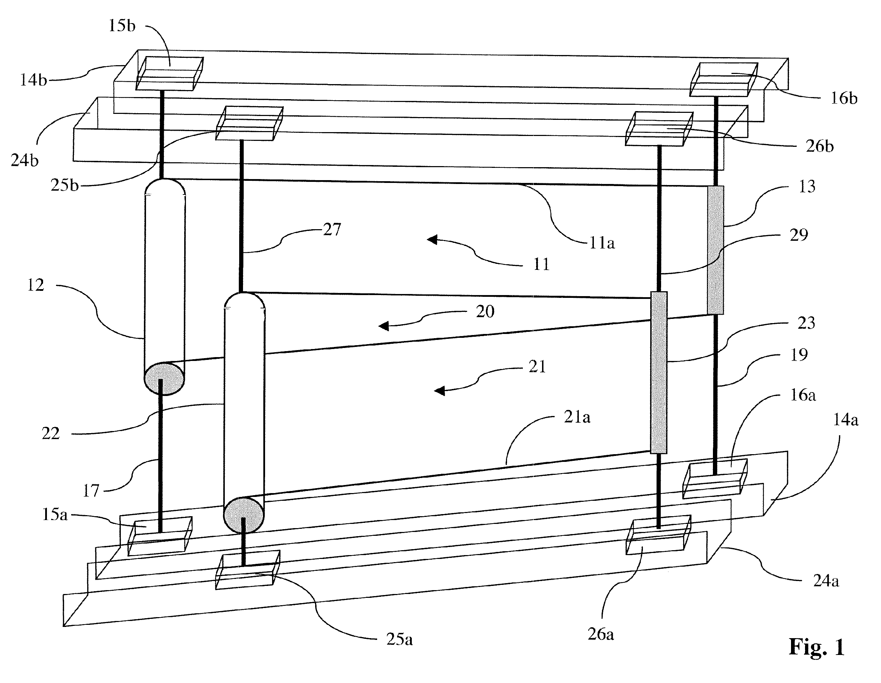

On présente, en relation avec la figure 1, un premier mode de réalisation du dispositif d'occultation d'une surface vitrée (non représentée) selon l'invention dans lequel les deux rideaux d'occultation 11 et 21 sont de forme trapézoïdale. Les rideaux 11 et 21 sont respectivement montés sur un tube d'enroulement 12, 22 et leur extrémité libre est équipée d'une barre de tirage 13, 23.

Deux paires de rails 14a, 14b et 24a, 24b, composées chacune d'un rail inférieur 14a, 24a et d'un rail supérieur 14b, 24b, sont situées le long de chacun des deux bords opposés non parallèles de la surface vitrée (non représentée) et guident le déplacement des tubes d'enroulement 12, 22 et des barres de tirage 13, 23 de chacun des stores. Les rails 14a et 14b guident ainsi le déplacement du tube d'enroulement 12 et de la barre de tirage 13 équipant le rideau 11 du premier store et les rails 24a et 24b guident le déplacement du tube d'enroulement 22 et de la barre de tirage 23 équipant le rideau 21 du second store.

Des éléments coulissants 17, 27, 19 et 29 pouvant coulisser respectivement à l'intérieur de tubes d'enroulement 12, 22 et des barres de tirage 13, 23 permettent de compenser la variation de l'écartement entre les deux paires de rail 14a, 14b et 24a, 24b.

L'extrémité libre des éléments coulissants 17, 27, 19 et 29 est équipée respectivement de patins 15a, 25b, 16a et 26b, et l'extrémité libre des tubes d'enroulement 12, 22 et des barres de tirage 13, 23 est équipée respectivement de patins 15b, 25a, 16b et 26a.

Les patins situés à l'intérieur des rails de guidage 14a, 14b et 24a, 24b permettent ainsi le déplacement des tubes d'enroulement 12, 22 et des barres de tirage 13, 23 le long de la surface vitrée. Les patins pourront bien sûr être remplacés par tout autre élément roulant et/ou coulissant facilitant et guidant le déplacement à l'intérieur des rails.

La présence de deux paires de rails permet le déplacement et le déploiement ou le repliement d'un des rideaux d'occultation indépendamment de l'autre rideau.

Dans un autre mode de réalisation, on peut prévoir classiquement un seul rail de chaque côté dans lequel coulissent les différents éléments.

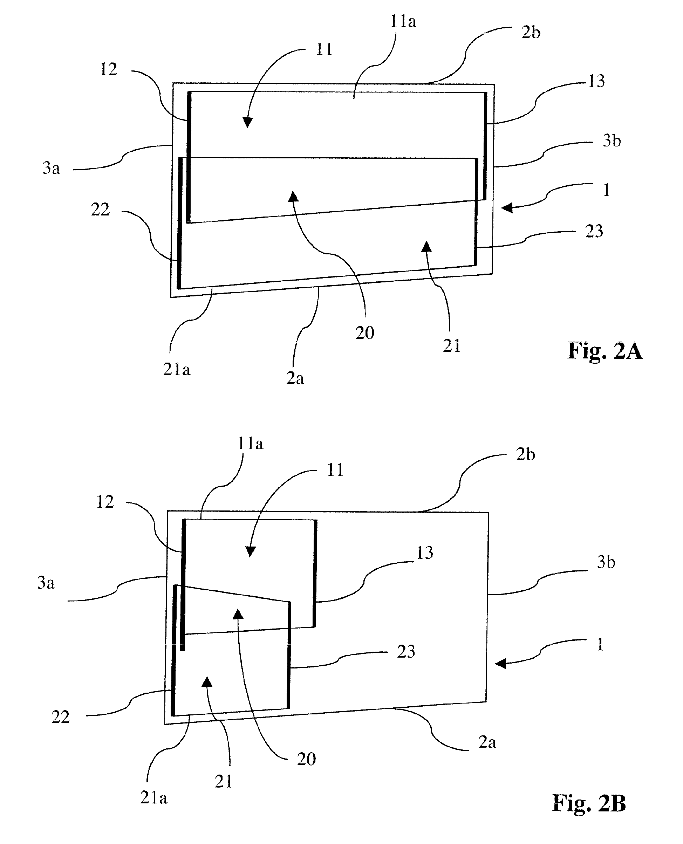

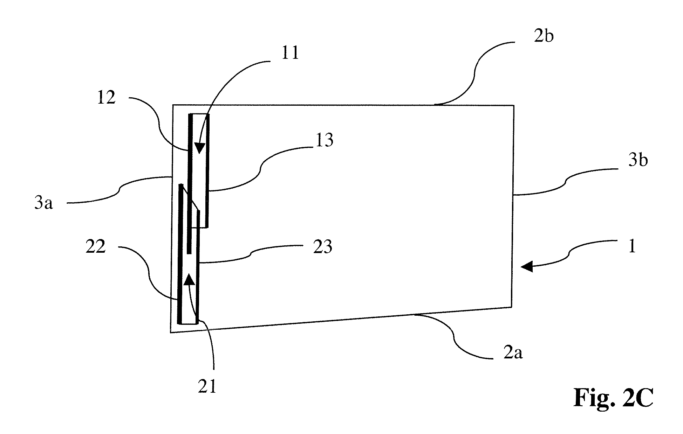

Ce dispositif offre ainsi une grande modularité dans l'occultation d'une baie 1 de véhicule automobile, comme l'illustrent les figures 2A, 2B, 2C ainsi que 3A, 3B et 3C commentées ci-après et présentant, selon le même mode de réalisation, différents états d'occultation de la surface vitrée 1.

La surface vitrée 1 pourra être une vitre arrière (ou hayon), latérale ou encore un pavillon de véhicule automobile, par exemple. L'invention peut également s'appliquer à un toit ouvrant ou un cache-bagages. La surface vitrée 1 présente quatre côtés 2a, 2b, 3a, et 3b, les deux côtés 2a et 2b étant deux bords opposés non parallèles de la vitre 1, le côté 3a la plus grande hauteur de la vitre, et le côté 3b la plus petite hauteur.

Des références numériques identiques désignent les mêmes éléments sur les figures 1, 2A, 2B, 2C, 3A, 3B, 3C, 4A, 4B, 5A, 5B, 5C, 6A, et 6B. Sur les figures 2A, 2B, 2C, 3A, 3B, 3C, 4A, 5A, 5B et 6A, les éléments coulissants 17, 27, 19 et 29 permettant de compenser la variation d'écartement entre les rails ne sont pas représentés.

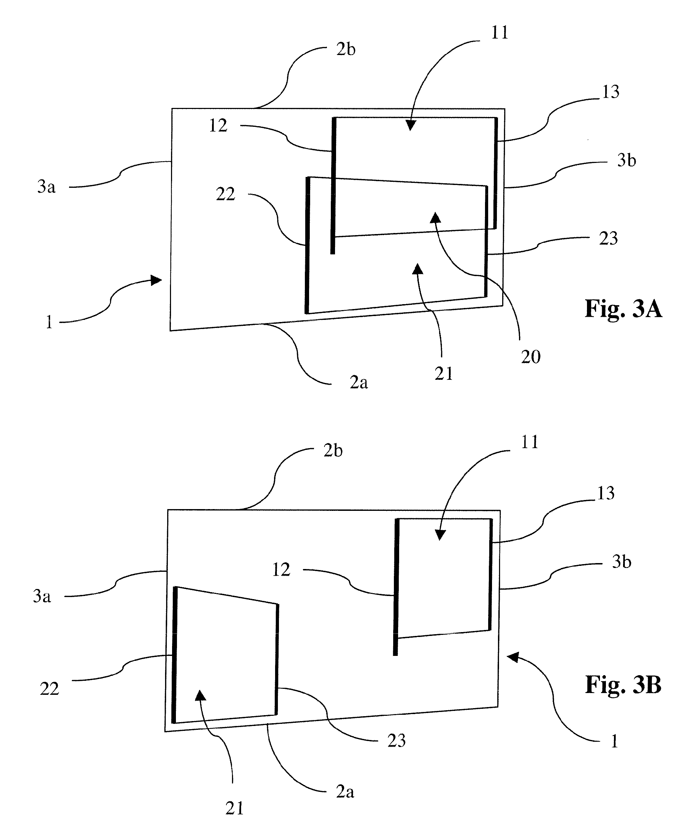

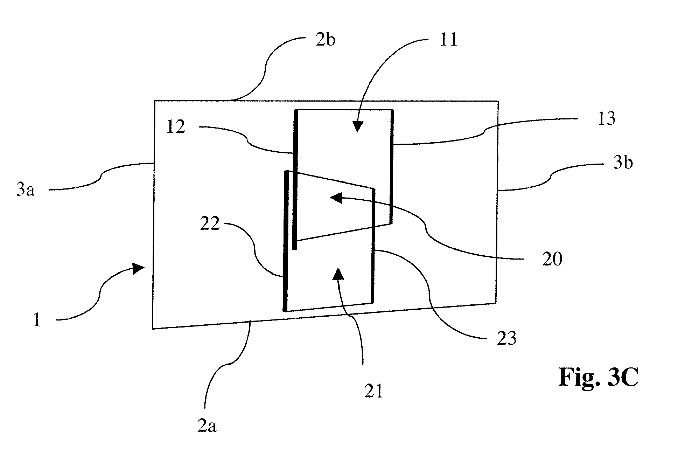

Sur les figures 2A, 2B, 2C, 3A, 3B, 3C, les deux rideaux d'occultation 11, 21 de forme trapézoïdale et présentent chacun un bord parallèle à l'un des bords non parallèle de la surface vitrée, le bord 11a du rideau 11 et le bord 21a du rideau 21 étant parallèles respectivement aux bords 2b et 2a de la vitre 1, et s'étendant le long de ces bords.

La figure 1A illustre le dispositif dans la position dans laquelle les deux rideaux 11 et 21 sont totalement déployés, les deux tubes d'enroulement 12, 22 étant situés au niveau du bord 3a de la vitre et les deux barres de tirage au niveau du bord 3b. Tel qu'illustré, les deux rideaux d'occultation 11 et 21 présentent une zone de recouvrement 20.

L'existence d'une zone de recouvrement 20 permet d'éviter le passage de la lumière entre les deux toiles 11 et 21 et d'assurer ainsi une meilleure occultation de la lumière que si celles-ci étaient simplement accolées l'une à l'autre sans se chevaucher.

Les figures 2B et 2C présentent respectivement un état d'occultation intermédiaire et un état d'occultation minimale du dispositif dans lesquels seules les barres de tirage 13 et 23 ont été déplacées le long des rails de guidage par rapport à l'état illustré par la figure 2A, et sont situées sensiblement au même niveau de la vitre 1.

Les figures 3A, 3B et 3C illustrent le même dispositif dans lequel les barres de tirage 13, 23 et/ou les tubes d'enroulement 12, 22 ont été déplacés.

Selon la figure 3A, seule la partie droite de la fenêtre est occultée par le dispositif. Selon la figure 3B, seules une partie inférieure gauche et une partie supérieure droite sont occultées et selon la figure 3C, seule la partie centrale de la vitre est occultée.

Une pluralité d'états d'occultation différents peuvent ainsi être obtenus, comme par exemple, l'occultation d'une partie supérieure de la surface vitrée uniquement. Ces figures illustrent ainsi bien la grande modularité qu'offre le dispositif selon l'invention par rapport aux techniques connues dans l'art antérieur.

Comme l'illustrent les figures précédentes, la hauteur sur laquelle les rideaux d'occultation se recouvrent diminue au fur et à mesure du déplacement des barres de tirage 13 et 23 vers la plus grande hauteur 3a de la vitre 1. En effet, les bords 11a et 21a des toiles s'étendent en permanence le long des bords 2b et 2a respectivement de la vitre 1. Ainsi, au fur et à mesure du déplacement de la barre de tirage 23 équipant le rideau inférieur 21 vers la plus grande hauteur 3a de la vitre, la hauteur qu'atteint l'extrémité supérieure de la barre de tirage 23 par rapport à la fenêtre diminue progressivement.

Pour obtenir une modularité optimale du dispositif, il est préférable que les deux tubes d'enroulement 12, 22 et les deux barres de tirage 13, 23 soient de longueur inférieure à la plus petite hauteur 3b de la surface à occulter. Ceux-ci pourront ainsi être déplacés sur toute la longueur de la vitre 1.

De plus, pour une occultation optimale de la vitre, il est avantageux que la somme des longueurs des deux tubes d'enroulement soit supérieure ou égale à la plus grande hauteur 3a de la vitre, de façon que les deux rideaux 11, 21 se chevauchent ou soient accolés l'un à l'autre, respectivement. Sinon, une bande non occultée subsisterait entre les bords adjacents deux rideaux.

Enfin, de façon que l'occultation soit optimale et qu'une telle zone non occultée ne soit pas présente entre les deux rideaux d'occultation, il sera également avantageux que la somme des longueurs des deux barres de tirage 13, 23 soit supérieure à la plus grande hauteur 3a de la surface à occulter 1.

En effet, comme mentionné ci-avant et comme visible sur les différentes figures, la hauteur de la zone de recouvrement diminue au fur et à mesure du déplacement des toiles vers la plus grande hauteur 3a de la vitre 1. C'est en fait le « chevauchement en hauteur » des barres de tirage 13, 23 qui diminue lors de leur déplacement vers ce bord 3a de la surface vitrée.

Ainsi, le fait que la somme des longueurs des deux barres de tirage 13, 23 soit supérieure à la plus grande hauteur 3a de la vitre permettra d'éviter l'apparition d'une zone non occultée entre les bords adjacents des rideaux d'occultation 11, 21 lors du déplacement des barres de tirage 13, 23 vers la plus grande hauteur.

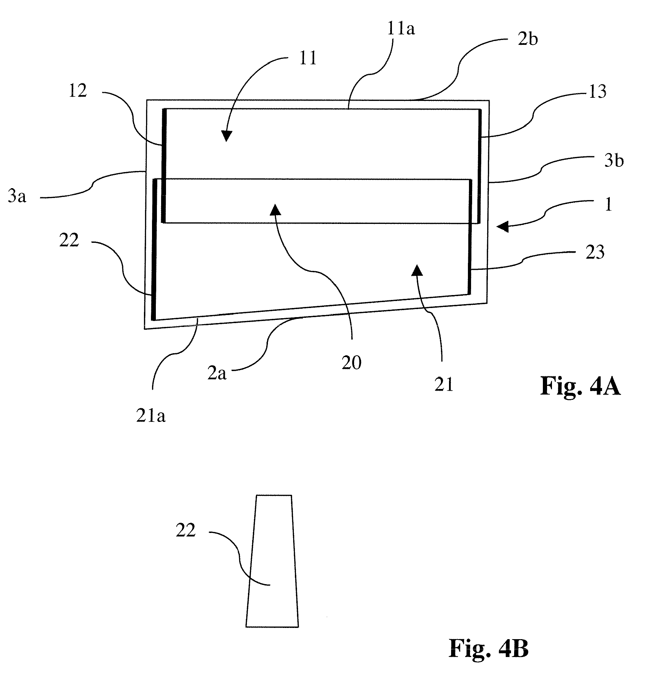

La figure 4A illustre un second mode de réalisation du dispositif selon l'invention, selon lequel la vitre 1 non rectangulaire est occultée par un rideau d'occultation inférieur 21 trapézoïdal et un rideau supérieur 11 rectangulaire.

Cela pourra bien sûr aisément être envisagé lorsqu'un des bords non parallèles d'une surface vitrée forme un angle droit avec les deux bords adjacents, comme c'est le cas sur la figure 4A.

La figure 4B illustre un tube d'enroulement 22 tronconique. En effet, dans les différentes figures présentées ci-avant, il pourra être avantageux de prévoir un tel enrouleur plutôt qu'un enrouleur cylindrique classique pour équiper le rideau 21. Le bord 21a de ce rideau s'étend en effet en permanence le long du bord 2a de la vitre 1 et à la même distance de celui-ci, et ce quelque soit la position et le degré d'enroulement du rideau 21 autour du tube d'enroulement 22.

Lors de l'enroulement du rideau 21 autour du tube 22, la tension sur chacun des deux bord du rideau ne sera pas la même, le tube d'enroulement n'étant pas perpendiculaire au bord 21a du rideau alors que la direction de progression du rideau est parallèle à ce bord 21a.

Ainsi, l'utilisation d'un tube d'enroulement tronconique présentant une base plus large du côté duquel s'enroule le bord 21a du rideau permet de compenser cette différence de tension et de progression lors de l'enroulement du rideau 21, et d'éviter en conséquence que le rideau 21 ne fronce ou forme des plis.

L'avantage que présente l'utilisation un tel tube d'enroulement dépendra notamment de l'angle formé entre le bord 21a du rideau 21 et le tube d'enroulement 22 (plus celui-ci sera éloigné de 90° et plus cela s'avèrera intéressant), ainsi que de la longueur du rideau 21.

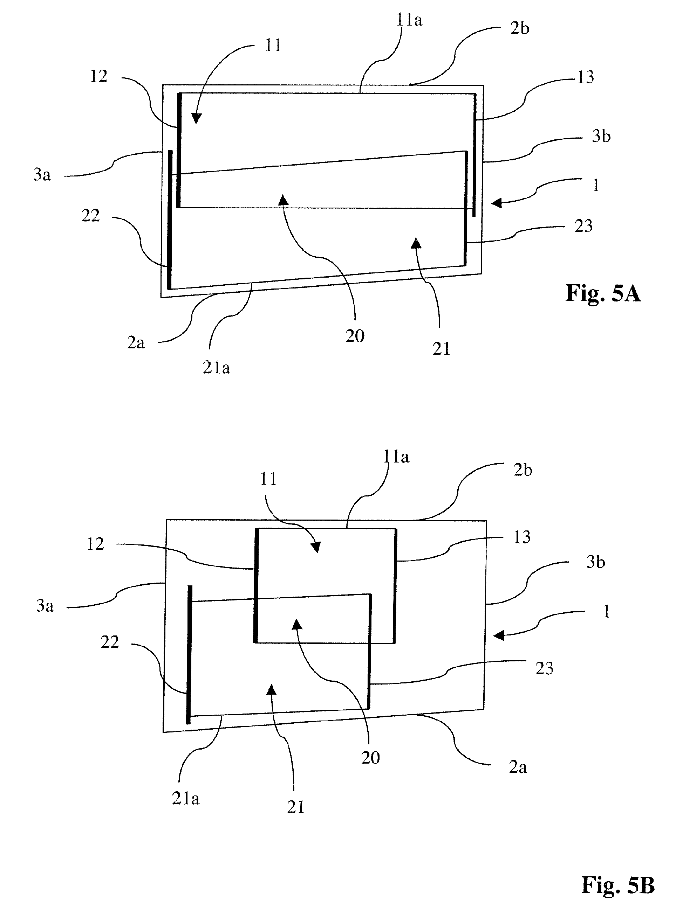

Les figures 5A et 5B présentent un troisième mode de réalisation de l'invention dans lequel un rideau 11 rectangulaire et un rideau 21 de la forme d'un parallélogramme sont mis en oeuvre, respectivement dans un état d'occultation maximale et dans un état d'occultation intermédiaire.

Les bords des deux rideaux d'occultation 11a et 21a s'étendent respectivement le long des bords 2a, 2b de la vitre 1, et lors de l'enroulement du rideau 21 de la forme d'un parallélogramme, celui-ci va se décaler progressivement le long du tube d'enroulement 22. Le bord supérieur du rideau 21 va notmment progresser vers le haut du tube 22 et préférentiellement, la longueur du tube d'enroulement 22 sera donc prévue supérieure à la largeur du rideau 21, comme représenté sur la figure 5A, de façon que le rideau 21 puisse s'enrouler autour du tube 22 tout en se décalant.

La figure 5B illustre le dispositif dans la position intermédiaire. Le même décalage vertical que celui observé pour le bord supérieur du rideau d'occultation se produira pour le bord inférieur 21a.

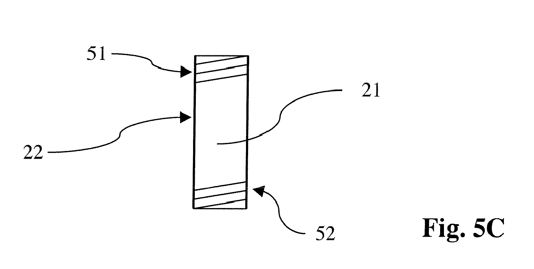

La figure 5C présente le tube d'enroulement 22 autour duquel est enroulé de façon décalée le rideau 21. Le décalage du bord inférieur 21a du rideau est à l'origine d'un léger surélèvement du bord 21a du rideau par rapport au bord 2a de la vitre 1. Au fur et à mesure de l'enroulement une petite surface triangulaire inférieure non occultée apparaîtra, la taille de celle-ci étant d'autant réduite que l'angle formé entre le bord 2a et le bord 3a sera proche de 90° (c'est-à-dire d'autant que les angles du parallélogramme formé par le rideau 21 seront proches d'un angle droit).

Il sera bien sûr possible de d'occulter la surface triangulaire non occultée de la vitre 1 en traitant la vitre de façon à opacifier celle-ci, par exemple par sérigraphie.

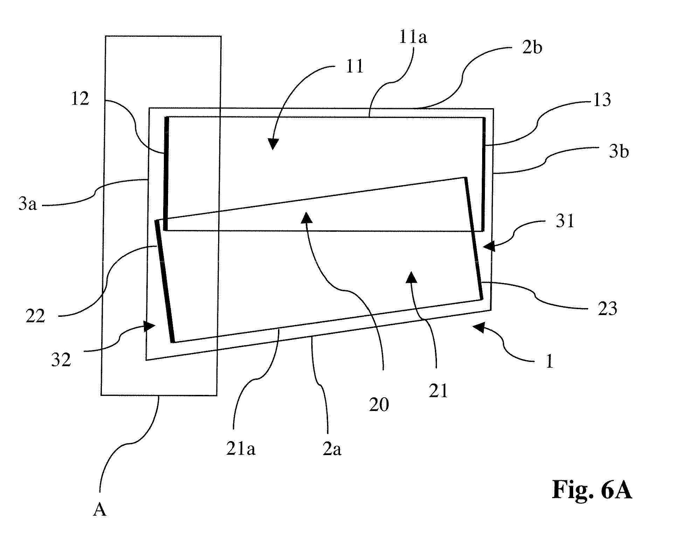

La figure 6A présente un quatrième mode de réalisation de l'invention mettant en oeuvre deux rideaux d'occultation 11 et 21 rectangulaires. Les deux rideaux ne sont donc pas parallèles, les bords 11a et 21a de ceux-ci étant parallèles respectivement aux bords non parallèles 2b et 2a de la surface vitrée 1.

Selon ce mode de réalisation, les tubes d'enroulement 12, 22 des rideaux 11, 21 respectivement ne sont donc pas parallèles. Ainsi, lorsque les rideaux d'occultation 11, 21 sont totalement déployés, deux zones 32, 31 de la surface vitrée, de forme triangulaire, ne sont pas occultées, en raison du léger angle formé par les tubes d'enroulement 12, 22, ainsi que par les barres de tirage 13, 23. Sur la figure 6A, la zone non occultées 32 est située à gauche du tube d'enroulement 22 et la zone 31 à droite de la barre de tirage 23.

Ces deux zones 31, 32 sont généralement petites, et peuvent comme indiqué précédemment être traitées par sérigraphie par exemple, s'il est souhaitable qu'elles soient occultées.

Selon les différents modes de réalisation présentés ci-avant le déploiement des rideaux d'occultation 11 et 21 se fait dans le même sens. Les tubes d'enroulement 12, 22 équipant les rideaux 11, 21 sont ainsi situés au niveau d'un même bord 3a de la surface vitrée 1 lorsque les rideaux sont totalement déployés, les barres de tirages 13, 23 étant également situées au niveau d'un même bord 3b opposé au bord 3a.

Il est cependant envisageable que cela ne soit pas le cas et que les deux stores se déploient en sens contraire, c'est-à-dire l'un vers l'autre. Il suffit alors d'inverser le montage de l'un des stores de façon que la barre de tirage du premier store et le tube d'enroulement du second store soient situés du même côté de la vitre et que barre de tirage du second store et le tube d'enroulement du premier store soient situés l'autre côté.

Par ailleurs, selon les modes de réalisation présentés ci avant, les tubes d'enroulement 12, 22 sont mobiles l'un par rapport à l'autre, ainsi que les deux barres de tirage 13, 23. Il pourra cependant être envisagé que seules les barres de tirages 13 et 23 soient mobiles ou seuls les tubes d'enroulement, ou toute autre combinaison

Cela aurait bien sûr pour effet de réduire la modularité d'occultation du dispositif, mais permettrait par ailleurs de simplifier le dispositif tout en conservant une modularité plus importante que les techniques connues dans l'art antérieur.

De plus, selon les modes de réalisation présentés, le déplacement, des tubes d'enroulement et des barres de tirage se fait indépendamment les uns des autres, les stores pouvant ainsi être déployés, repliés, et déplacés indépendamment l'un de l'autre.

Selon une autre variante l'invention, il sera possible de solidariser le déplacement de certains éléments, tels que les deux tubes d'enroulement par exemple dans le cas où les deux stores se déploient dans le même sens, grâce à des moyens de liaison.

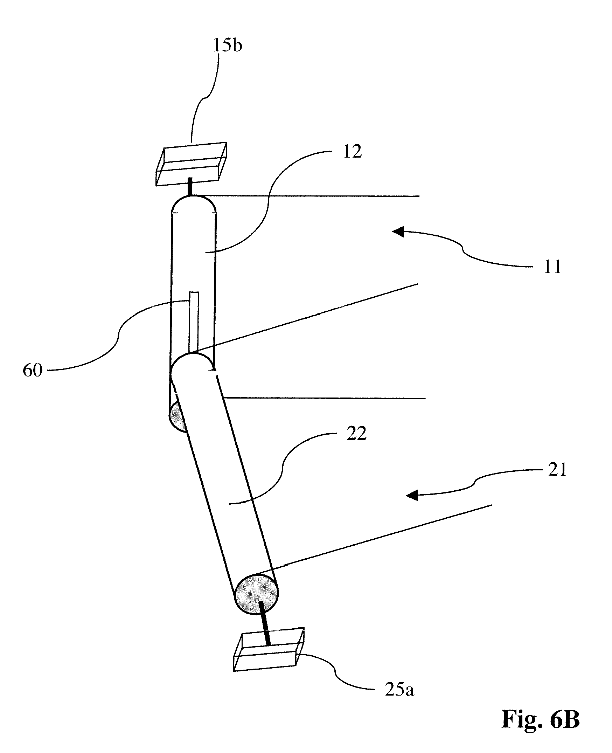

La figure 6B illustre ce mode de réalisation de l'invention dans le cas d'un dispositif selon la figure 6A, comprenant deux rideaux d'occultation 11, 21 rectangulaires et dont les tubes d'enroulement 12, 22 ne sont pas parallèles. Des moyens de liaison solidarisent en coulissement le déplacement des deux tubes d'enroulement 12 et 22, formés par une liaison glissière comprenant une fente 60 solidaire d'un premier tube d'enroulement 12 et d'une protubérance (non visible) solidaire du second tube d'enroulement 22.

Ainsi, lors du déplacement des tubes d'enroulement le long des rails de guidage s'étendant le long de la fenêtre, les tubes coulissent l'un par rapport à l'autre, la protubérance se déplaçant à l'intérieur de la fente 60.

De la même manière, il sera possible d'envisager de solidariser en coulissement les deux barres de tirages de chacun des stores si ceux-ci se déploient dans le même sens, ou dans le cas où ils se déploient en sens contraire, de solidariser en coulissement la barre de tirage de l'un des stores avec le tube d'enroulement de l'autre store.

Une telle solidarisation en coulissement de tubes d'enroulement et/ou des barres de tirage pourra être envisagée dans le différents mode de réalisation, et n'est bien sûr pas limitée au cas particulier où les tubes d'enroulement et les barres de tirages forment un angle non nul, comme dans le cas de deux rideaux rectangulaires, illustré par la figure 6A.

En outre, lorsque deux éléments (tubes d'enroulement et/ou barres de tirage) sont solidarisés en coulissement, chaque élément peut constituer pour celui dont il est solidaire en coulissement l'élément coulissant permettant de compenser la variation de l'écartement entre les rails de guidage.

Il sera donc possible dans ce cas de s'affranchir des éléments coulissants télescopiques 17, 27, 19 et 29 de façon à simplifier l'ensemble du dispositif. En effet, En effet, la solidarisation en coulissement a alors la même fonction que ces éléments coulissants, et permet de compenser la variation d'écartement des rails

Ainsi, comme illustré par la figure 6B, un tube d'enroulement est l' « élément coulissant » pour l'autre tube d'enroulement, et inversement. Cela est bien sûr également valable pour toute autre solidarisation en coulissement, comme par exemple d'une des barres de tirage avec un des tube d'enroulement et une seule paire de rails sera nécessaire pour guider le déplacement des tubes d'enroulement et des barres de tirage et permettre le déploiement des rideau d'occultation.

Ainsi, lorsque les tubes d'enroulement et les deux barres de tirage sont solidarisées en coulissement et que les éléments coulissants ne sont pas présents, une seule paire de rail pourra être utilisées, les deux rails pouvant alors ne pas être situés dans un même plan vertical, dans le cas de l'occultation d'une fenêtre verticale par exemple.

Si cela est nécessaire, les deux rails pourront ne pas être situés dans un même plan vertical, dans le cas de l'occultation d'une fenêtre verticale par exemple.

D'une façon générale, le dispositif d'occultation pourra être mis oeuvre avec une seule paire de rail pour les différents modes de réalisation présentés, que certains des éléments soient solidarisés en coulissement ou non. Cela permet la réalisation d'un dispositif plus simple et pouvant être adapté aux véhicules équipés selon les techniques classiques de l'art antérieur mettant en oeuvre un unique store à enrouleur coulissant dans une seule paire de rails, tout en offrant une plus grande modularité d'occultation que les techniques connues.

Le déplacement des barres de tirages et des tubes d'enroulement peut se faire manuellement. Il sera également possible de prévoir des moyens d'actionnement de façon que leur déplacement et/ou la rotation du ou des tubes d'enroulement puisse être motorisés.

Par ailleurs, bien que les différentes figures illustrent le cas où la surface vitrée présente deux bords opposés non parallèles, et deux bords opposés parallèles, l'invention s'applique de la même manière pour l'occultation d'une surface vitrée ne présentant aucun bord parallèle. Dans ce cas, les rideaux d'occultation présenteront une forme adaptée à la surface vitrée, et plus particulièrement, le tube d'enroulement et la barre de tirage équipant un rideau d'occultation ne seront éventuellement pas parallèles l'un à l'autre.

L'invention s'étend bien sûr à toute autre variante, combinaison de ces différents modes de réalisation ainsi qu'aux véhicules équipés d'un tel dispositif d'occultation.

## Revendications

1. Dispositif d'occultation pour une surface vitrée d'un véhicule automobile présentant au moins deux bords opposés non parallèles, comprenant deux stores à enrouleur comprenant chacun un rideau d'occultation solidaire d'un tube d'enroulement à l'une de ses extrémités et une barre de tirage à son autre extrémité,
**caractérisé en ce que** chacun desdits rideaux d'occultation présente un côté parallèle à un desdits bords non parallèles de ladite surface à occulter (et s'étendant le long de ce bord),
et **en ce qu'**au moins une desdites deux barres de tirages et/ou au moins un desdits deux tubes d'enroulement sont guidés dans au moins deux rails de guidage non parallèles situés le long de chacun desdits deux bords non parallèles de la surface à occulter et comprennent au moins un élément coulissant de façon à compenser la variation de l'écartement entre lesdits rails.

2. Dispositif d'occultation selon la revendication 1, **caractérisé en ce que** ladite barre de tirage et/ou ledit tube d'enroulement d'un premier desdits deux stores sont guidés dans une première paire de rails et ladite barre de tirage et/ou ledit tube d'enroulement du second desdits deux stores sont guidés dans une seconde paire de rails, les rails de chacun desdites deux paires de rails étant situés le long de chacun desdits deux bords non parallèles de la surface à occulter.

3. Dispositif d'occultation selon l'une quelconque des revendications 1 et 2, **caractérisé en ce que** la somme des longueurs desdits deux tubes d'enroulement est supérieure ou égale à la plus grande des hauteurs de ladite surface vitrée.

4. Dispositif d'occultation selon l'une quelconque des revendications 1 à 3, **caractérisé en ce que** la somme des longueurs desdits deux barres de tirage est supérieure ou égale à la plus grande des hauteurs de ladite surface vitrée.

5. Dispositif d'occultation selon l'une quelconque des revendications 1 à 4, **caractérisé en ce qu'**un premier desdits deux rideaux d'occultation est trapézoïdal et le second desdits deux rideaux d'occultation est trapézoïdal ou rectangulaire.

6. Dispositif d'occultation selon l'une quelconque des revendications 1 à 4, **caractérisé en ce qu'**un premier desdits deux rideaux d'occultation est rectangulaire et le second desdits deux rideaux d'occultation est rectangulaire ou de la forme d'un parallélogramme.

7. Dispositif d'occultation selon l'une quelconque des revendications 1 à 6, **caractérisé en ce que** le déploiement desdits deux rideaux d'occultation se fait en dans le même sens ou en sens contraire.

8. Dispositif d'occultation selon l'une quelconque des revendications 1 à 7, **caractérisé en ce que** lesdits deux tubes d'enroulement sont solidaires et montés coulissants l'un par rapport à l'autre par des moyens de liaison.

9. Dispositif d'occultation selon l'une quelconque des revendications 1 à 8, **caractérisé en ce que** les extrémités desdites barres de tirage et/ou desdits tubes d'enroulement sont solidaires d'éléments roulant et/ou coulissants se déplaçant à l'intérieur desdits rails, liés par une liaison de type pivot.

10. Véhicule automobile, **caractérisé en ce qu'**il comprend au moins un dispositif d'occultation selon l'une quelconque des revendications 1 à 9.
